# EUROPÄISCHE PATENTANMELDUNG

(11) **EP 4 231 398 A1**
(43) Veröffentlichungstag der Anmeldung: **23.08.2023**
(21) Anmeldenummer: 22157278.7
(22) Anmeldetag: 17.02.2022
(51) Int. Cl.: H01M 10/04, H01M 4/04

(54) **VORRICHTUNG UND VERFAHREN ZUM BEARBEITEN EINES FOLIENARTIGEN ELEKTRODENBLATTES**

(71) Anmelder: Sonplas GmbH, 94315 Straubing (DE)
(72) Erfinder: SCHMUCK, Benedikt, 94505 Bernried (DE)
(74) Vertreter: Wunderlich & Heim Patentanwälte Partnerschaftsgesellschaft mbB

(57) **Zusammenfassung**

Die Erfindung betrifft eine Vorrichtung und ein Verfahren zum Bearbeiten eines folienartigen Elektrodenblattes mit mindestens einer Bearbeitungsstation, mit einer Übergabestation zum Übergeben des Elektrodenblattes in einer im Wesentlichen horizontalen Position und mindestens einer Transporteinrichtung zum Transportieren des Elektrodenblattes von der Übergabestation zu der mindestens einen Bearbeitungsstation. Nach der Erfindung ist mindestens eine Transporteinrichtung als ein umlaufendes Vakuumtransportband mit mindestens einem horizontalen unteren Transportabschnitt ausgebildet, welcher nach unten gerichtet ist und an welchem das Elektrodenblatt durch Unterdruck ansaugbar und nach unten weisend anlegbar ist.

## Beschreibung

Die Erfindung betrifft eine Vorrichtung zum Bearbeiten eines folienartigen Elektrodenblattes mit mindestens einer Bearbeitungsstation gemäß dem Anspruch 1.

Die Erfindung betrifft weiterhin ein Verfahren zum Bearbeiten eines folienartigen Elektrodenblattes gemäß dem Anspruch 10.

Moderne Batterien und Akkumulatoren sind aus einer Vielzahl von sehr dünnen und empfindlichen Elektrodenblättern aufgebaut. Die Elektrodenblättern werden dabei unter Zwischenlegung jeweils einer feinen Membran übereinander gestapelt, um so eine Akkumulatorzelle zu bilden.

Die Elektrodenblättern werden durch Stanzen oder Laserschneiden aus einem Ausgangsmaterial hergestellt und weisen ein Trägerblatt auf, welches mit einer Beschichtung versehen ist. Die empfindlichen Elektrodenblätter müssen in einem hochreinen Zustand verarbeitet werden und dürfen keine Verformungen oder Grate aufweisen. Diese könnten in dem Elektrodenstapel einen Kurzschluss verursachen. Hierdurch wäre die Akkumulatorzelle unbrauchbar oder könnte in Brand geraten.

Derartige Elektrodenblätter werden automatisch in verschiedenen Stationen bearbeitet und sind sehr sorgfältig und mit großer Vorsicht zu handhaben. Hierfür werden häufig Greifer oder Mehrachsroboter eingesetzt. Das Bearbeiten der Elektrodenblätter umfasst auch ein Reinigungs- und Prüfschritte vor dem Bilden eines Elektrodenstapels, um eine hohe Produktqualität sicherzustellen.

Der Erfindung liegt die **Aufgabe** zugrunde, eine Vorrichtung und ein Verfahren anzugeben, mit welchen folienartige Elektrodenblätter besonders schonend und zuverlässig bearbeitet werden können.

Die Aufgabe wird zum einen durch eine Vorrichtung mit den Merkmalen des Anspruchs 1 und zum anderen durch ein Verfahren mit den Merkmalen des Anspruchs 10 gelöst. Bevorzugte Ausführungsformen der Erfindung sind in den abhängigen Ansprüchen angegeben.

Nach der Erfindung ist die Vorrichtung zum Bearbeiten eines folienartigen Elektrodenblattes mit mindestens einer Bearbeitungsstation, eine Übergabestation zum Übergeben des Elektrodenblattes in einer im Wesentlichen horizontalen Position und mindestens einer Transporteinrichtung zum Transportieren des Elektrodenblattes von der Übergabestation zu der mindestens einen Bearbeitungsstation versehen, wobei mindestens eine Transporteinrichtung als ein umlaufendes Vakuumtransportband mit mindestens einem horizontalen unteren Transportabschnitt ausgebildet ist, welcher nach unten gerichtet ist und an welchem das Elektrodenblatt unter Unterdruck ansaugbar und nach unten weisend anlegbar ist.

Zum Übernehmen und Weiterleiten eines Elektrodenblattes in einer horizontalen Position von einer Übergabestation zu einer Bearbeitungsstation ist nach der Erfindung zumindest ein Vakuumtransportband vorgesehen. Das Vakuumtransportband weist insbesondere ein umlaufendes Transportband auf, wobei in einem inneren Transportabschnitt ein Vakuum oder ein Unterdruck erzeugt wird. Das bandförmige Fördermittel ist mit feinen Löchern oder Öffnungen versehen, so dass über das Förderband Luft von außen nach innen gesaugt werden kann. Der Unterdruck ist dabei so eingestellt, dass bei einem Anlegen oder Annähern des Elektrodenblattes an die Unterseite des Vakuumtransportbandes das Elektrodenblatt an das Förderband flächig angesaugt und dort zuverlässig gehalten und transportiert werden kann. Dies ermöglicht ein besonders schonendes Aufnehmen und Transportieren auch eines sehr feinen und empfindlichen Elektrodenblattes.

Beschädigungen oder Verformungen können dabei zuverlässig vermieden werden. Durch entsprechende Reduktion oder Abbau des Unterdrucks an einer Abgabestelle kann das Elektrodenblatt wieder von dem Vakuumtransportband gelöst und einfach etwa an eine nachfolgende Bearbeitungsstation übergeben werden.

Mit der erfindungsgemäßen Anordnung können aufwändige Greifer oder Mehrachsroboter vermieden werden, welche zudem ein erhöhtes Risiko einer Beschädigung eines Elektrodenblattes mit sich bringen.

Eine bevorzugte Weiterbildung der Erfindung besteht darin, dass die Übergabestation eine Auflage mit einer Oberseite aufweist, auf welcher das Elektrodenblatt zum Übergeben aufgelegt ist, und dass das Vakuumtransportband in den Bereich der Übergabestation hineinreicht, wobei das Elektrodenblatt von der Oberseite der Auflage an den unteren Transportabschnitt des Vakuumtransportbandes ansaugbar ist. Grundsätzlich kann das Vakuumtransportband an das Elektrodenblatt herangeführt werden. Bevorzugt ist es jedoch, die Auflage der Übergabestation bewegbar auszubilden und so das zu fördernde Elektrodenblatt an den unteren Transportabschnitt des Vakuumtransportbandes herangeführt wird. Hierdurch kann eine zuverlässige und schonende Übergabe des empfindlichen Elektrodenblattes an das Vakuumtransportband bewirkt werden.

In einer einfachen Ausführung kann die Vorrichtung eine einzelne Transporteinrichtung aufweisen. Für eine mehrfache Bearbeitung eines Elektrodenblattes ist es nach einer Weiterbildung der Erfindung bevorzugt, dass mindestens eine weitere Transporteinrichtung zum Transportieren des Elektrodenblattes vorgesehen ist. Die Transporteinrichtungen müssen nicht allein aus Vakuumtransportbändern bestehen, sondern können auch andere Transporteinrichtungen, wie herkömmliche Förderbänder, Greifer oder Mehrachsroboter umfassen.

Besonders zweckmäßig ist es nach einer Weiterbildung der Erfindung, dass eine zweite Transporteinrichtung mit einem nach oben gerichteten oberen Transportabschnitt ausgebildet ist, auf welchem das Elektrodenblatt von der Unterseite des Vakuumtransportbandes auf den oberen Transportabschnitt der zweiten Transporteinrichtung ablegbar ist. Durch eine derartige Anordnung kann auch ein Bearbeiten des Elektrodenblattes während des Transports zum einen von einer Unterseite und anschließend von einer Oberseite ohne einen Wendevorgang erfolgen. Dies erlaubt eine weitere besonders schonende Handhabung eines empfindlichen Elektrodenblattes.

Besonders vorteilhaft ist es dabei, dass die mindestens eine weitere Transporteinrichtung als ein Transportband, insbesondere ein Vakuumtransportband, ausgebildet ist. Ein Transportband erlaubt eine besonders schonende Bewegung mit einer flächigen Auflage des Elektrodenblattes. Dabei kann auch eine Bearbeitung des Elektrodenblattes auf dem Transportband erfolgen. Insbesondere bei der Verwendung eines Vakuumtransportbandes kann eine ausreichende Lagefixierung des Elektrodenblattes sichergestellt werden.

Die erfindungsgemäße Vorrichtung kann eine oder mehrere Bearbeitungsstationen aufweisen. Bevorzugt ist es dabei, dass die mindestens eine Bearbeitungsstation zum materialabtragenden Bearbeiten, Beschichten, Reinigen, Messen und/oder Prüfen des Elektrodenblattes ausgebildet ist. Es kann auch eine Kombination unterschiedlicher derartiger Bearbeitungsstationen in der Vorrichtung vorhanden sein, welche zur Herstellung eines Elektrodenblattes notwendig sind. Insbesondere kann eine Bearbeitungsstation zum Stanzen oder Laserschneiden eines Elektrodenblattes aus einem Ausgangsmaterial vorgesehen sein.

Die Übergabestation kann in einer einfachen Version lediglich aus einer Auflagefläche zum Ablegen und Übergeben eines Elektrodenblattes bestehen. Besonders vorteilhaft ist es nach einer Ausführungsvariante der Erfindung, dass an der Übergabestation eine Handhabungseinrichtung zum Bewegen des Elektrodenblattes zu einer Übergabeposition vorgesehen ist. Die Handhabungseinrichtung kann insbesondere ein Transportschlitten sein, auf welchem ein Elektrodenblatt aufliegt und zu einer Übergabeposition an das Vakuumtransportband verfahrbar ist.

Eine weitere bevorzugte Ausführungsform der Erfindung besteht darin, dass eine Abgabestation zum Abgeben des bearbeiteten Elektrodenblattes angeordnet ist. Das Abgeben von dem Vakuumtransportband erfolgt durch eine lokale Reduktion oder ein Abschalten des Unterdrucks, so dass das Elektrodenblatt an der Unterseite des Transportabschnittes allein von der Schwerkraft von dem Transportband gelöst wird. Nötigenfalls kann durch Schaltung eines gewissen Überdrucks an dem Transportband ein Luftstrom zum Lösen oder Abblasen des Elektrodenblattes erzeugt werden. Besonders bevorzugt ist es weiterhin, dass an der Abgabestation eine Stapeleinrichtung zum Stapeln der bearbeiteten Elektrodenblätter vorgesehen ist. Die Stapeleinrichtung kann dabei so ausgebildet sein, dass zwischen den einzelnen bearbeiteten Elektrodenblättern eine Membran- oder Trennschicht eingelegt wird, so wie dies zum Bilden einer funktionsfähigen Akkumulatorzelle notwendig ist.

Die Erfindung umfasst weiterhin ein Verfahren zum Bearbeiten eines folienartigen Elektrodenblattes, bei dem in einer Übergabestation das Elektrodenblatt in einer im Wesentlichen horizontalen Position übergeben wird und das Elektrodenblatt von der Übergabestation zu mindestens einer Bearbeitungsstation mittels mindestens einer Transporteinrichtung transportiert wird, wobei mindestens eine Transporteinrichtung als ein umlaufendes Vakuumtransportband mit mindestens einem horizontalen unteren Transportabschnitt ausgebildet ist, welcher nach unten gerichtet ist und durch welchen das Elektrodenblatt angesaugt und nach unten weisend angelegt wird.

Das Verfahren kann insbesondere durch die zuvor beschriebene erfindungsgemäße Vorrichtung durchgeführt werden. Dabei können die zuvor beschriebenen Vorteile erzielt werden.

Ein Bearbeiten des Elektrodenblattes kann dabei erfolgen, während dieses an dem Vakuumtransportband angelegt ist oder im Anschluss an den Transport nach Abgabe zu einer weiteren Bearbeitungsstation. Das Bearbeiten kann eine materialändernde Bearbeitung oder ein Messen oder Prüfen sein.

Grundsätzlich kann ein beliebiges Bearbeiten des Elektrodenblattes erfolgen. Eine besonders bevorzugte Verfahrensvariante besteht darin, dass das Elektrodenblatt in der mindestens einen Bearbeitungsstation bearbeitet wird, wobei das Bearbeiten ein materialabtragendes Bearbeiten und/oder ein Beschichten und/oder ein Reinigen und/oder ein Messen und/oder ein Prüfen des Elektrodenblattes umfasst. Durch die Verwendung eines Vakuumtransportbandes kann ein schonendes Handhaben des Elektrodenblattes beim Bearbeiten oder beim Transport zu oder von einer Bearbeitungsstation erreicht werden.

Insbesondere ist es nach einer Weiterbildung der Erfindung vorteilhaft, dass das Elektrodenblatt am unteren Transportabschnitt des Vakuumtransportbandes von unten bearbeitet wird. Somit kann unmittelbar nach dem Aufnehmen des Elektrodenblattes eine Bearbeitung der Unterseite folgen.

Eine weitere zweckmäßige Ausführungsvariante des erfindungsgemäßen Verfahrens besteht darin, dass das Elektrodenblatt von dem Vakuumtransportband auf einen oberen Transportabschnitt einer weiteren Transporteinrichtung übergeben wird, wobei das Elektrodenblatt anschließend von oben bearbeitet wird. Die weitere Transporteinrichtung kann dabei ebenfalls ein Transportband, insbesondere ein Vakuumtransportband sein. Durch das Abgeben an eine Oberseite eines nachfolgenden Transportbandes liegt nunmehr die Oberseite des Elektrodenblattes frei und kann dort bearbeitet werden. Somit kann eine zweiseitige Bearbeitung des Elektrodenblattes erfolgen, ohne dass ein aufwendiger Wendevorgang erfolgt.

Ein besonders effizientes Verfahren wird weiterhin dadurch erzielt, dass nach dem Bearbeiten die bearbeiteten Elektrodenblätter in einer Abgabestation mittels einer Stapeleinrichtung gestapelt werden. Insbesondere können die Elektrodenblätter unter Zwischenlegung einer entsprechenden Membran- oder Trennschicht zu einem fertigen Elektrodenstapel zum Bilden einer Akkumulatorzelle übereinandergeschichtet werden.

Die Erfindung wird nachfolgend anhand eines bevorzugten Ausführungsbeispiels näher beschrieben, welches schematisch in den Zeichnungen dargestellt ist. In den Zeichnungen zeigen:
- Fig. 1: eine Seitenansicht einer Anlage mit einer erfindungsgemäßen Vorrichtung;
- Fig. 2: eine Vorderansicht der Anlage von Figur 1;
- Fig. 3: eine Draufsicht auf die Anlage der Figuren 1 und 2.

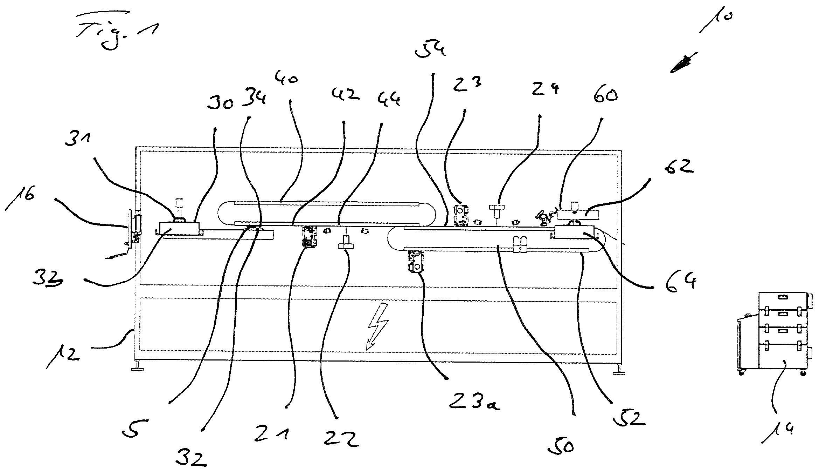

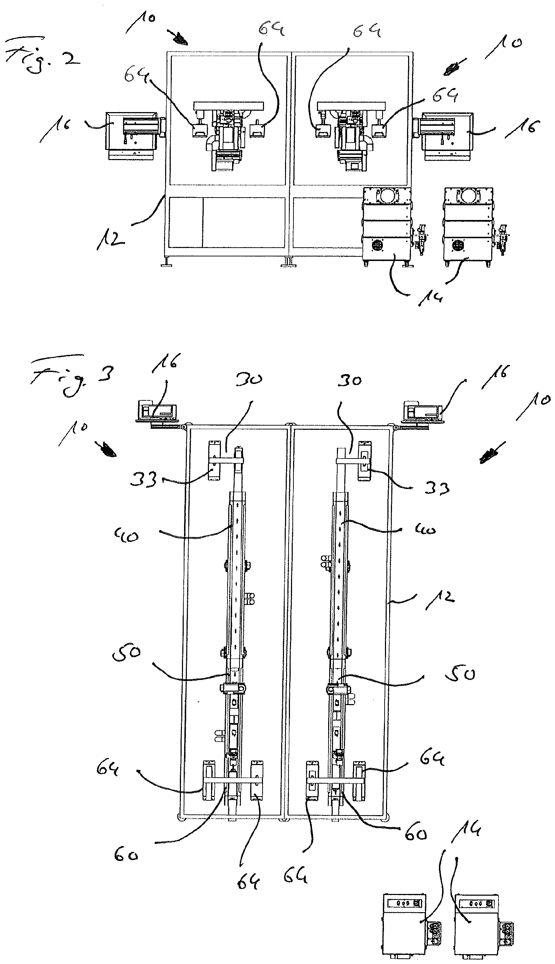

Gemäß den Figuren 1 bis 3 ist eine Anlage mit insgesamt zwei erfindungsgemäßen Vorrichtungen 10 zum Bearbeiten eines folienartigen Elektrodenblattes 5 dargestellt. Die beiden Vorrichtungen 10 sind weitgehend gleich ausgebildet und unmittelbar nebeneinander angeordnet, wobei die jeweiligen Rahmen 12 miteinander verbunden sind.

Die vorausgehend hergestellten Elektrodenblätter 5 werden jeweils in einem Magazin 33 an eine Übergabestation 30 an einem stirnseitigen Eingang der Vorrichtung 10 übergeben. Über eine schematisch angedeutete Handhabungseinrichtung 31, welche einen Vakuumgreifer aufweisen kann, kann ein Elektrodenblatt 5 auf einen linear verfahrbaren Schlitten 32 übergeben und auf einer Auflage 34 an der Oberseite des Schlittens 32 abgelegt werden. Mit dem Schlitten 32 kann das darauf abgelegte Elektrodenblatt 5 zu einer Übergabeposition unterhalb einer ersten Transporteinrichtung 40 verfahren werden.

Die erste Transporteinrichtung 40 ist als ein Vakuumtransportband 42 ausgebildet. Das Vakuumtransportband 42 umfasst ein mit feinen Öffnungen versehenes umlaufendes Transportband, welches an seiner Innenseite mit einer Unterdruckquelle in Verbindung steht. Durch den bewirkten Unterdruck wird das Elektrodenblatt 5 von dem Schlitten 32 nach oben an einen unteren Transportabschnitt 44 angesaugt. Mit dem Vakuumtransportband 42 kann das nach unten gerichtete angesaugte Elektrodenblatt 5 zu einer ersten Bearbeitungsstation 21 gefördert werden, in welcher eine offen liegende Unterseite des Elektrodenblatts 5 bearbeitet werden kann.

Im dargestellten Ausführungsbeispiel kann die erste Bearbeitungsstation 21 zum Reinigen des Elektrodenblattes 5 ausgebildet sein. Nach dem Reinigen kann das Elektrodenblatt 5 mit dem Vakuumtransportband 42 weiter zu einer zweiten Bearbeitungsstation 22 gefördert werden, wobei ein Prüfen des Elektrodenblattes 5 erfolgt, vorzugsweise hinsichtlich einer Formgebung und/oder zur Reinigungszustand. Anschließend wird das so bearbeitete Elektrodenblatt 5 zu einem Übergangsbereich mit einer zweiten Transporteinrichtung 50 gefördert.

Durch Aufheben des Vakuums im Übergangsbereich kann das Elektrodenblatt 5 von dem unteren Transportabschnitt 44 des Vakuumtransportbandes 42 gelöst und auf einem oberen Transportabschnitt 54 eines darunter angeordneten umlaufenden Transportbandes 52 der zweiten Transporteinrichtung 50 abgelegt werden. So abgelegt, kann eine Oberseite des Elektrodenblattes 54 nach einem Weitertransport zu einer dritten Bearbeitungsstation 23 weiterbearbeitet werden.

An der dritten Bearbeitungsstation 23 kann insbesondere ein Reinigen der nach oben gerichteten Oberseite des Elektrodenblattes 4 erfolgen. Sodann kann ein weiterer Transport zu einer vierten Bearbeitungsstation 24 erfolgen, an welchem ebenfalls ein Prüfen entsprechend der zweiten Bearbeitungsstation 22 erfolgen kann.

In dem dargestellten Ausführungsbeispiel ist die zweite Transporteinrichtung 50 mit einem normalen Transportband 52 ausgebildet. Grundsätzlich kann die zweite Transporteinrichtung 50 auch entsprechend der ersten Transporteinrichtung 40 mit einem Vakuumtransportband versehen sein. In diesem Fall könnte auch ein Transport des Elektrodenblattes 5 entlang der Unterseite der zweiten Transporteinrichtung 50 erfolgen, wobei dann, wie schematisch angedeutet, etwa die dritte Bearbeitungsstation 23a an der Unterseite angeordnet ist.

Nach der abschließenden Bearbeitung kann das Elektrodenblatt 5 im Bereich einer Abgabestation 60 mittels einer Stapeleinrichtung 62 von der zweiten Transporteinrichtung 50 erfasst und auf einen Stapel eines Abgabemagazins 64 abgelegt werden. Im dargestellten Ausführungsbeispiel sind zu beiden Seiten der zweiten Transporteinrichtung 50 jeweils ein Abgabemagazin 64 angeordnet.

Eine Steuerung der Vorrichtungen 10 beziehungsweise der Gesamtanlage kann über separate Steuerungen 14 und/oder mittels einem Bildschirm 16 mit Tastatur erfolgen.

## Patentansprüche

1. Vorrichtung zum Bearbeiten eines folienartigen Elektrodenblattes (5) mit mindestens einer Bearbeitungsstation (21, 22, 23, 24),
mit
- einer Übergabestation (30) zum Übergeben des Elektrodenblattes (5) in einer im Wesentlichen horizontalen Position und
- mindestens einer Transporteinrichtung (40, 50) zum Transportieren des Elektrodenblattes (5) von der Übergabestation (30) zu der mindestens einen Bearbeitungsstation (21, 22, 23, 24),
- wobei mindestens eine Transporteinrichtung (40) als ein umlaufendes Vakuumtransportband (42) mit mindestens einem horizontalen unteren Transportabschnitt (44) ausgebildet ist, welcher nach unten gerichtet ist und an welchem das Elektrodenblatt (5) durch Unterdruck ansaugbar und nach unten weisend anlegbar ist.

2. Vorrichtung nach Anspruch 1,
dadurch ge kennzeichnet,
dass die Übergabestation (30) eine Auflage (34) mit einer Oberseite aufweist, auf welcher das Elektrodenblatt (5) zum Übergeben aufgelegt ist, und
dass das Vakuumtransportband (42) in den Bereich der Übergabestation (30) hineinreicht, wobei das Elektrodenblatt (5) von der Oberseite der Auflage (34) an den unteren Transportabschnitt (44) des Vakuumtransportbandes (42) ansaugbar ist.

3. Vorrichtung nach Anspruch 1 oder 2,
**dadurch gekennzeichnet,**
**dass** mindestens eine weitere Transporteinrichtung (50) zum Transportieren des Elektrodenblattes (5) vorgesehen ist.

4. Vorrichtung nach Anspruch 3,
**dadurch gekennzeichnet,**
**dass** eine zweite Transporteinrichtung (50) mit einem nach oben gerichteten oberen Transportabschnitt (54) ausgebildet ist, auf welchen das Elektrodenblatt (5) von der Unterseite des Vakuumtransportbandes (42) auf den oberen Transportabschnitt (54) der zweiten Transporteinrichtung (50) ablegbar ist.

5. Vorrichtung nach Anspruch 3 oder 4,
**dadurch gekennzeichnet,**
**dass** die mindestens eine weitere Transporteinrichtung (50) als ein Transportband (52), insbesondere ein Vakuumtransportband, ausgebildet ist.

6. Vorrichtung nach einem der Ansprüche 1 bis 5,
**dadurch gekennzeichnet,**
**dass** die mindestens eine Bearbeitungsstation (21, 22, 23, 24) zum materialabtragenden Bearbeiten, Beschichten, Reinigen, Messen und/oder Prüfen des Elektrodenblattes (5) ausgebildet ist.

7. Vorrichtung nach einem der Ansprüche 1 bis 6,
**dadurch gekennzeichnet,**
**dass** an der Übergabestation (30) eine Handhabungseinrichtung (31) zum Bewegen des Elektrodenblattes (5) zu einer Übergabeposition vorgesehen ist.

8. Vorrichtung nach einem der Ansprüche 1 bis 7,
**dadurch gekennzeichnet,**
**dass** eine Abgabestation (60) zum Abgeben des bearbeiteten Elektrodenblattes (5) angeordnet ist.

9. Vorrichtung nach Anspruch 8,
**dadurch gekennzeichnet,**
**dass** an der Abgabestation (60) eine Stapeleinrichtung (62) zum Stapeln der bearbeiteten Elektrodenblätter (5) vorgesehen ist.

10. Verfahren zum Bearbeiten eines folienartigen Elektrodenblattes (5), insbesondere mit einer Vorrichtung (10) nach einem der Ansprüche 1 bis 9, bei dem
- in einer Übergabestation (30) das Elektrodenblatt (5) in einer im Wesentlichen horizontalen Position übergeben wird und
- das Elektrodenblatt (5) von der Übergabestation (30) zu mindestens einer Bearbeitungsstation (21, 22, 23, 24) mittels mindestens einer Transporteinrichtung (40, 50) transportiert wird,
- wobei mindestens eine Transporteinrichtung (40) als ein umlaufendes Vakuumtransportband (42) mit mindestens einem horizontalen unteren Transportabschnitt (44) ausgebildet ist, welcher nach unten gerichtet ist und durch welchen das Elektrodenblatt (5) angesaugt und nach unten weisend angelegt wird.

11. Verfahren nach Anspruch 10,
**dadurch gekennzeichnet,**
**dass** das Elektrodenblatt (5) in der mindestens einen Bearbeitungsstation (21, 22, 23, 24) bearbeitet wird, wobei das Bearbeiten ein materialabtragendes Bearbeiten und/oder ein Beschichten und/oder ein Reinigen und/oder ein Messen und/oder ein Prüfen des Elektrodenblattes (5) umfasst.

12. Verfahren nach Anspruch 10 oder 11,
**dadurch gekennzeichnet,**
**dass** das Elektrodenblatt (5) am unteren Transportabschnitt (42) des Vakuumtransportbandes (42) von unten bearbeitet wird.

13. Verfahren nach einem der Ansprüche 10 bis 12,
**dadurch gekennzeichnet,**
**dass** das Elektrodenblatt (5) von dem Vakuumtransportband (42) auf einen oberen Transportabschnitt (54) einer weiteren Transporteinrichtung (50) übergeben wird, wobei das Elektrodenblatt (5) anschließend von oben bearbeitet wird.

14. Verfahren nach einem der Ansprüche 10 bis 13,
**dadurch gekennzeichnet,**
**dass** nach dem Bearbeiten die bearbeiteten Elektrodenblätter (5) in einer Abgabestation (60) mittels einer Stapeleinrichtung (62) gestapelt werden.
